# EUROPEAN PATENT SPECIFICATION

(11) **EP 2 222 585 B1**
(45) Date of publication and mention of the grant of the patent: **26.06.2024**
(21) Application number: 08863431.6
(22) Date of filing: 18.12.2008
(51) Int. Cl.: B65G 53/52, B65G 53/34, B08B 9/032, B65F 5/00, B65G 53/24, B65G 53/66

(54) **METHOD IN PNEUMATIC MATERIAL CONVEYING SYSTEM AND A PNEUMATIC MATERIAL CONVEYING SYSTEM**
VERFAHREN BEI PNEUMATISCHEN MATERIALBEFÖRDERUNGSSYSTEM UND PNEUMATISCHES MATERIALBEFÖRDERUNGSSYSTEM
PROCÉDÉ MIS EN OEUVRE DANS UN SYSTÈME DE TRANSPORT DE MATIÈRES PNEUMATIQUE ET SYSTÈME DE TRANSPORT DE MATIÈRES PNEUMATIQUE ASSOCIÉ

(30) Priority: 21.12.2007 FI 20075950; 21.12.2007 FI 20075951; 18.02.2008 FI 20085142
(43) Date of publication of application: 01.09.2010
(73) Proprietor: Maricap OY, 01450 Vantaa (FI)
(72) Inventor: SUNDHOLM, Göran, FI-04310 Tuusula (FI)
(74) Representative: Papula Oy
(86) International application number: PCT/FI2008/050758
(87) International publication number: WO 2009/080882

(56) References cited:
- WO-A1-2005/085104
- DE-A1- 4 239 305
- FR-A1- 2 271 140
- GB-A- 1 435 611
- GB-A- 1 435 611
- JP-A- S62 105 094
- JP-A- 2007 225 195
- US-A- 4 995 765
- US-A- 4 995 765

## Description

### Background of invention

The invention relates to a method for feeding and conveying material in a pneumatic material conveying system.

The invention further relates to a pneumatic material conveying system.

The invention relates particularly to collecting and conveying waste, such as conveying household waste.

Systems are known in which waste is conveyed in a piping by means of suction. In these, waste is conveyed for long distances in the piping by suction. Apparatuses are utilised, inter alia, for conveying waste in different institutions. Typical for them is that a vacuum apparatus is used for achieving a pressure difference, in which apparatus underpressure in the conveying pipe is provided with vacuum generators, such as vacuum pumps or an ejector apparatus. In the conveying pipe, there is typically at least one valve element by opening and closing of which make-up air coming in the conveying pipe is regulated. The vacuum conveying systems typically contain, inter alia, the following problems: high energy consumption, high air flow in the piping, problems with noise, dust and fine particles in the outlet pipe. Furthermore, prior-art apparatuses can have moisture problems. In rainy weather, the prior-art apparatuses can suck even e.g. 1,000 litres of water per suction from outdoor air. This causes problems with corrosion and blockages. For example, waste paper etc. sticks to the piping when moist. Furthermore, large systems have required arranging several separate make-up air valves, which increases the complexity and costs of the systems. JP S62-105094A, US4995765A, GB1435611A and FR2271140A show systems for pneumatically conveying material. FR2271140A discloses a pneumatic material conveying method and a related system for conveying waste, comprising a material conveying piping to which several feed points are connected via respective feed pipes. The system comprises further a separator device and two pump devices in parallel. The suction side of both pump devices are connected via a suitable air channel to the separator device. The blowing side of the pump devices blows air into the piping, which furthermore comprises an exit to the atmosphere so as to maintain the system at atmospheric pressure.

An object of this invention is to achieve a totally novel arrangement into connection with material conveying systems by means of which the disadvantages of known arrangements are avoided. A second object of the invention is to provide an arrangement applicable for vacuum conveying systems by means of which the noise problems of material feed can be decreased. A third object of the invention is to decrease the production of moisture in the piping. An additional object of the invention is to provide an arrangement by means of which the number of make-up air valves required in the system can be minimised. A further object is to provide an arrangement by means of which the volume of outlet air of the system and, at the same time, emissions of dust and fine particles and possible odour nuisances can be decreased.

### Brief description of invention

The method according to the invention comprises the features of claim 1.

In addition, the method according to the invention may comprise what is stated in claims 2-13.

The material conveying system according to the invention comprises the features of claim 14.

Furthermore, the material conveying system according to the invention may comprise what is stated in claims 15-23.

The arrangement according to the invention has numerous significant advantages. By opening and closing the feed points of the system according to the invention, the material is provided with an effective transfer into and conveyance in the conveying pipe when, at the same time, the noise effect caused by the operation of the system can be minimised. By arranging the conveying pipe of the material conveying system to consist of operating areas i.e. partial circuits, it is possible to effectively arrange the conveyance of the material in the conveying piping and emptying the feed points into the conveying pipe. By arranging the piping of the system to comprise a circuit where at least part of conveying air circulates, the volume of outlet air can be decreased. At the same time, the energy consumption of the system is minimised. By maintaining underpressure and simultaneously blowing, it is possible to provide an effective circulation of conveying air in the circuit and conveyance of material in the conveying pipe. With the arrangement according to the invention, it is possible to decrease the volume of outlet air substantially and simultaneously to decrease possible problems with dust and fine particles in the outlet pipe. The arrangement according to the invention also substantially decreases the noise problem caused by prior art. Moisture accumulated in the piping is minimised and the piping can be dried by circulating air in the piping. As the volume of air being sucked inside decreases, also energy consumption decreases. By arranging the conveying air circulation in the reverse direction, an effective removal of blockings is provided. In a circular piping, it is easily possible to arrange the change of the conveying air circulation in the reverse direction.

### Brief description of figures

In the following, the invention will be described in detail by means of an example with reference to the accompanying drawings in which
Fig. 1 schematically shows a system according to an embodiment of the invention,
Fig. 2 schematically shows a system according to a second embodiment of the invention,
Fig. 3 schematically shows a part of a system according to a third embodiment of the invention in a first operating mode,
Fig. 4 schematically shows a part of the system according to the third embodiment of the invention in a second operating mode,
Fig. 5 schematically shows a part of the system according to the third embodiment of the invention in a third operating mode,
Fig. 6 schematically shows a part of the system according to the third embodiment of the invention in a fourth operating mode, and
Fig. 7 schematically shows a part of the system according to the third embodiment of the invention in a fifth operating mode.

### Detailed description of invention

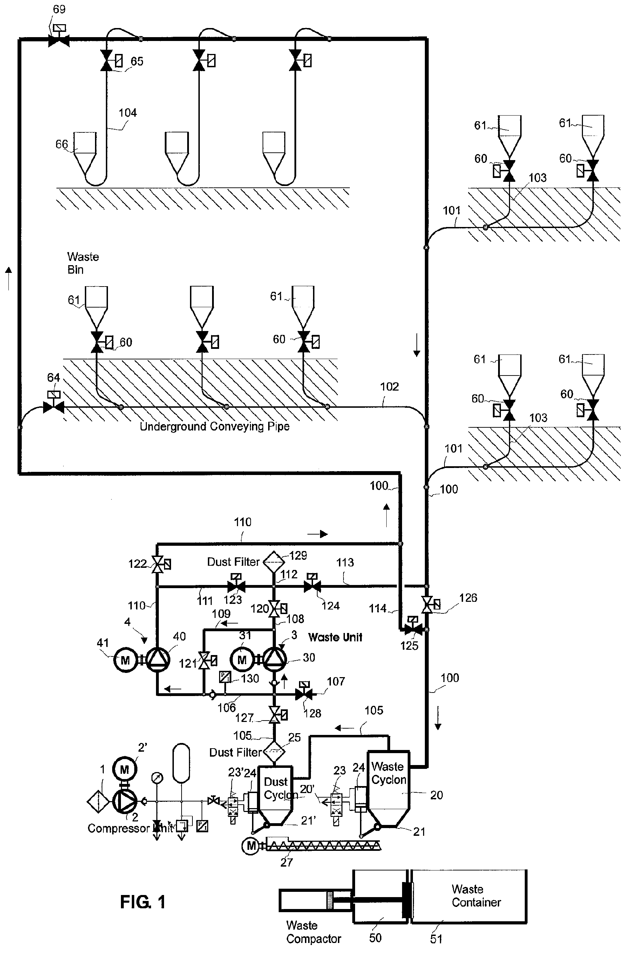

In Fig. 1, reference number 61, 66 designates a feed station of materials, particularly of waste material, intended to be conveyed, from which station material, particularly waste material, such as household waste, intended to be conveyed is fed to the conveying system. The system comprises several feed stations 61, 66 from which the material intended to be conveyed is fed to a conveying pipe 100, 101, 102, 103, 104. The conveying pipe comprises a main conveying pipe 100 into which several branch conveying pipes 101, 102 can be connected and into which again several feed stations 61, 66 can be connected via feed pipes 103, 104. The fed material is conveyed along the conveying pipe 100, 101, 102, 103, 104 to a separator device 20 in which the material being conveyed is separated, e.g. due to dropping rate and centrifugal force, from conveying air. The separated material is removed, e.g. when required, from the separator device 20 to a material container, such as a waste container 51, or to further treatment. The material container can comprise, as in the embodiment of the figures, a waste compactor 50 from which the material is further conveyed to the waste container 51. In the embodiment of Fig. 1, the separator device 20 is provided with material outlet elements 21, 24. From the separating device 20, a pipe 105 leads to means 3 for generating underpressure in the conveying pipe. In the embodiment of Fig. 1, the means for generating underpressure comprise a vacuum pump unit 3. With the means for generating underpressure, underpressure required for conveying the material is provided in the conveying pipe 100, 101, 102, 103, 104. The vacuum pump unit 3 comprises a pump 30 which is operated by an actuator 31.

According to the invention, the system further comprises a blower unit 4 which is connected in the embodiment of the figure from the blowing side to the conveying pipe 100. The conveying pipe 100 is a section of a circuit which in the embodiment of the figure is formed by the main conveying pipe 100, the separator device 20 and the pipes 105 and 106. The blower unit 4 comprises a blower 40 and its actuator 41. The blower 40 of the blower unit 4 is arranged from the suction side to the pipe 105, 106 coming from the separating device 20. The conveying pipe 100 is thus connected to the blower 40 on its blowing side. In the main conveying pipe is arranged at least one valve element 69 typically between the blower 40 of the blower unit 4 and the feed pipes 103 and/or branch conveying pipes 101, 102 in the blowing direction of the blower 40. The blower also generates underpressure together with the vacuum generator.

The valve element 64 and 69 being in the closed position, the blower 40 raises pressure to a section between the blower and the valve element 69 in the conveying pipe 100. Equivalently in a section of the circuit on the suction side of the vacuum generator 3 and/or the blower 40, when travelling against the conveying direction and/or the air flow direction, which comprises in the embodiment of the figure the pipes 105, 106, at least one separator device 20, 20' and a section of the main conveying pipe 100 from the separating device as far as the valves 69, underpressure prevails when the valves 69, 64 and the valves 60, 65 of the feed stations 61, 66 to the conveying pipe are closed.

In the embodiment of Fig. 1, the branch conveying pipe 102 extends from the pressure side of the main conveying pipe 100 to the suction side of the main conveying pipe i.e. forms a section of a smaller circuit. In the branch conveying pipe 102, at its end on the side of the pressure side of the main conveying pipe, is arranged the valve 64. The valve 64 of the branch conveying pipe being open and the valve 69 of the main conveying pipe being closed, a smaller circuit is formed in the embodiment of the figure in which air circulates from the blower 40 from the pressure side of the main conveying pipe via the branch conveying pipe 102 to the suction side of the main conveying pipe and further via the separator device to the pipe 105 and 106. When the vacuum pump unit runs, part of air circulating in the circuit is led to an outlet 34.

In the embodiment according to Fig. 1, into the main conveying pipe 100 are connected two first branch conveying pipes 101. In the figure, into both first branch conveying pipes 101 are connected two feed stations 61. Into the second branch conveying pipe 102 are connected three feed stations 61 by means of feed pipes 103. However, there can be more of them, e.g. 20. They can be opened and the material conveyed to the conveying pipe stepwise, first the one closest in relation to the separator device 20, then the next closest etc.

In the upper part of the figure, there are further three feed stations 66 connected directly to the main conveying pipe via feed pipes 104.

The sum of suctions provided by the vacuum unit 3 and the blower unit 4 to the conveying pipe 100, in the figure from the side of the separator device, is greater than the blowing provided by the blower unit, whereby conveyance takes place in underpressure. With the blower 40, it is typically possible to provide pressure which is e.g. in the range of 0.1-0.5 bar. With the vacuum generators, it is again typically possible to provide underpressure which is e.g. in the range of 0.1-0.5 bar. The blowing stores energy (i.e. overpressure) in the section of the conveying pipe 100 between the blower 40 and the valve 69 (and the valve 64) along with the rise of pressure, when the valves 69, 64 are closed, e.g. +0.5 bar. The suction of the vacuum unit 3 stores on the other side i.e. to the section of the valve 69 and the separator device 20 (and the pipe 105) underpressure which is e.g. -0.5 bar. When at least one of the valves 69, 64 opens, the pressure difference can then be even 1 bar. The suction being greater than blowing, underpressure is provided in the pipe, whereby waste can be sucked inside the pipe from a funnel of the feed station 61.

The suction being greater than the blowing, which is the target in the system according to the invention, material fed to the conveying pipe, particularly waste material, will not be compressed and compacted, but will be able to travel "freely" in the pipe conveyed by conveying air. Then, the potential of the material being conveyed to form blockages is considerably lower than in a situation in which the blowing is greater than the suction, whereby there is a risk that the material being conveyed will accumulate and block the conveying pipe. Furthermore, underpressure decreases the power required to convey the material, because even partial underpressure in relation to the material portion being conveyed on the side of the conveying direction considerably decreases air drag, among others. In the figure, arrows designate the direction of motion of air in the pipe in the operating mode.

In conveying material, such as conveying waste material, when the material of the feed point is first conveyed by suction via the feed pipe 101, 103 or 104 to the conveying pipe, extremely fast acceleration and conveyance are provided for the material.

The conveying power provided by the pressure difference can then be e.g. in a pipe of a diameter of 400 mm about in the range of 12.32 kN (1,256 kp). The pressure side of the conveying pipe 100, i.e. in the example of the figure the section between the blower 40 and the valve 69, 64, can be substantially smaller of its diameter than the suction side of the conveying pipe, i.e. typically at least the section between the valve 69, 64 and the separator device 20. The pressure side can then be formed more advantageous of its diameter and costs.

In the embodiment of the figure, in the pipe 106 on the suction side of the blower is formed a fitting 107 in which there is a valve 128 by opening of which extra air can be brought on the suction side of the vacuum unit and/or the blower from outside the circuit. By opening the valve 128, it is possible to raise the pressure of air in the conveying pipe if required and to provide an increased conveying rate for conveying the material.

To the feed pipes 103, 104 is arranged the outlet valve 60, 65 which is opened and closed so that material portions of suitable size are conveyed from the feed point 61, 66 to the branch conveying pipe 101, 102 or directly to the main conveying pipe 100. Material is fed from the feed point 61, 66, such as a waste container, when after the container is full, the outlet valve 60, 65 is opened either automatically or manually.

The system typically operates as follows: An outlet hatch 21 of the separator device 20 is closed and a valve 26 between the main conveying pipe 100 and the separator device 20 is open. The vacuum pump unit 3 and/or the blower unit 4 maintains underpressure in the main conveying pipe 100. A suction effect provided by the vacuum unit 3 and the blower unit 4 together via the separator device 20 to the conveying pipe 100 is greater than a pressure effect provided by the blower unit 4 to the conveying pipe 100 at its one end i.e. to the blowing side, to the section between the blower 40 and the valve 69 or the valve 64.

All outlet valves 60, 65 in the vicinity of the feed points i.e. waste containers are closed. In the start situation, the area valve 64 of the branch conveying pipe 102 and the line valve 69 of the main conveying pipe 100 are closed.

Let us assume that a waste container of the feed point 61 belonging to the area of the first branch conveying pipe 101 is to be emptied. Based on an emptying signal, the outlet valve 60 is momentarily opened, e.g. for 2-10 seconds, whereby the material being conveyed, such as waste material, conveys from the effect of underpressure to the branch conveying pipe and further to the main conveying pipe 100. The outlet valve 60 is typically closed after a few seconds after the start situation. The vacuum pump unit 3 maintains desired underpressure and the blower unit 4 starts unless not already running. The valve 69 is opened, whereby in the pipe is provided blowing i.e. an intensified pressure effect and suction effect which conveys the material portion being conveyed along the pipe to the separator device 20.

When the separator device 20 is full, the valve 26 of the conveying pipe 100 closes and a control valve 23 opens, whereby the actuator 24 of the outlet hatch 21 of the separator device opens the outlet hatch 21 and the material accumulated in the separator device is emptied in the compactor device 50 and further in the waste container 51. The outlet hatch 21 of the separator device 20 is closed and the valve 26 opened.

After this, the start situation is reverted and the emptying process can be repeated or the emptying of some other feed point/feed points can be implemented.

The waste container 51, such as a waste freight container, is replaced or emptied when it is full.

In waste conveyance, it is possible to optimise air circulation and blowing so that the blowing is always directed as close as possible to the material portion being conveyed. If a material portion fed directly via the feed point 66 is being conveyed, first is opened the valve 69 in the main conveying pipe 100. After the material portion has passed the connecting point of the branch conveying pipe 102 and the main conveying pipe 100 in the case of the figure, the valve 64 of the branch conveying pipe is opened and the valve 69 of the main conveying pipe is closed, whereby the blowing effect directs at the material portion being conveyed as close as possible and the motion of the material portion can be best maintained in the conveying pipe.

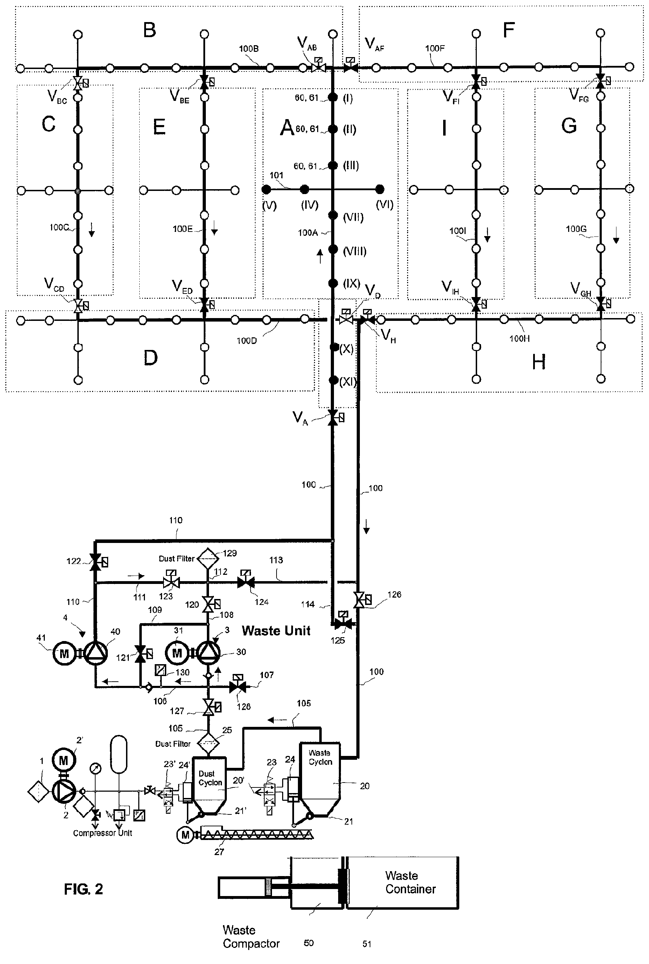

Fig. 2 shows an advantageous embodiment of a system according to the invention. In the figure, the feed stations or feed points 61 and gate elements 60 in connection with them are diagrammatically designated along the conveying pipe 100 with one circle. The feed point 61 typically comprises a feed container, such as a funnel, and the valve element 60 by which a connection from the feed point to the conveying pipe 100 is closed and opened. The system conveying piping 100 and the feed points 61 along with it are dividable by area valves V_{A}, V_{AB}, V_{BC}, V_{BE}, V_{BE},...etc. arranged in the conveying pipe to operating areas A, B, C, D, E, F, G, H, I. In the figure, each part of the conveying pipe 100 of the operating area is designated with the letter of the corresponding operating area, whereby at the point of the operating area A the conveying pipe is designated with 100A and at the point of operating area B the conveying pipe is designated with 100B. A corresponding designation is used for the other operating areas. The operation of the system is controlled so that, for emptying the feed points of a desired operating area, at least one valve is open in the material conveying direction in relation to the operating area of the conveying pipe 100 and on the supply side of the conveying air i.e. on the side of suction, whereby the suction is able to affect the conveying pipe of the operating area. Let us assume that, in the arrangement according to the figure, the feed points 61 of the area A are to be emptied. Then, all area valves between the separator device 20 and the operating area A in the conveying pipe 100 (the sections 100B, 100C, 100D of the conveying pipe in the figure) in the conveying direction are open (the valves V_{AB}, V_{BC}, V_{CD}, V_{D} in the figure). Then, suction provided by at least one vacuum generator 3 prevails in the conveying pipe 100A in the operating area A. At least one valve V_{A} on the blowing side of the conveying pipe 100A is closed, whereby only suction prevails in the operating area A. The feed points 61 of the operating area or at least part of them are emptied so that the connection of the feed point 61 (I) closest to the delivery end in the conveying direction of the conveying pipe, i.e. in the embodiment according to the figure closest to the separator device 20, to the conveying pipe 100A is opened first, whereby the material is able to convey from the first feed point to the conveying pipe, and before the connection of the first feed point (I) to the conveying pipe closes, the connection of the next feed point 61 (II) to the conveying pipe is opened. In the embodiment of the figure, this is, when travelling against the material conveying direction, the next feed point 61 (II) intended to be emptied. After this, the connection of the first feed point 61 (I) is closed to the conveying pipe. Equivalently, the connection of the third feed point 61 (III) intended to be emptied to the conveying pipe is opened before the connection of the second feed point 61 (II) to the conveying pipe is closed. This operation is repeated until all desired feed points have been emptied. In the figure, it has been considered emptying all the feed points 61 of the area A, whereby their emptying sequence to the conveying pipe 100, 100A is designated in the figure by numerals within parentheses: (I), (II), (III), (IV), (V), (VI), (VII), (VIII), (IX), (X), and (XI). When the passage of the last feed point 61 (XI) intended to be emptied in the operating area A to the conveying pipe 100 has been opened, the material has conveyed to the conveying pipe 100, 100A and the passage of the feed point to the conveying pipe is closed, a connection is opened in the conveying pipe 100A of the operating area A from the blowing side i.e. the blower 4 by opening at least one valve element V_{A} which is between the operating area A and the blower device 4 blowing to the conveying pipe 100. Then, an intensified conveying effect (suction and blowing together) is provided for the material being conveyed transferred in the conveying pipe 100, 100A, 100B, 100C, 100D. The conveying air circulates on a route designated with arrows in the figure, whereby material portions conveyed from the feed points to the conveying pipe convey in the conveying pipe on the route, in the example of the figure, which passes the areas B, C and D, and further to the separator device 20 in which the material being conveyed is separated from conveying air. In the figure, the area valves V_{BE} and V_{ED} of the conveying pipe 100E of the operating area E are closed, whereby conveying air and material being conveyed are not able to access the conveying pipe 100E of the operating area E but circulate via the conveying pipe 100C of the area C. In connection with the emptying of different operating areas, the material conveying route from the operating area to a delivery station, such as to the separator device 20, can be optimised by keeping the area valves open along the desired conveying route.

Material is conveyed in the conveying pipe to the separator device 20. The separator device 20 is emptied when required, e.g. to the material container 51, in connection with which there can be the compactor device 50. In the system according to the figure, a second separator device 20' is further arranged in the conveying air channel 105 after the separator device for separating smaller particles from conveying air. The particles separated by the second separator device 20' can be conveyed e.g. by a conveyor 27 to the material container 51. The second separator device 20' is followed in the conveying air channel 105 in the air circulation direction by a filter element 25 for removing small particles from conveying air. The air channel 105 is connected on the suction side of the vacuum generator 3 and the conveying air channel 105 branches before the vacuum generator 3 to a second conveying air channel 106 which is connected on the suction side of the blower device 4. The blowing side of the blower device is connected directly or via the air channel 110 to the conveying pipe 100. The conveying pipe 100 comprises at least one circuit in which conveying air can be circulated from the blowing side of the blower via the separator device 20 on the suction side. It is possible to regulate with the valves which one or ones of the operating areas A, B, C, D, E, F, G, H, I are connected to the active conveying circuit of the conveying pipe 100.

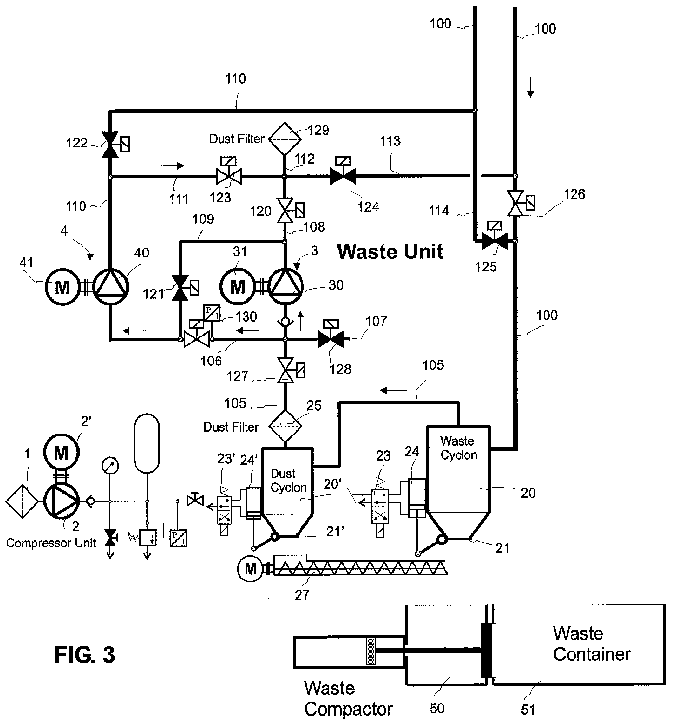

Fig. 3 schematically shows a part of a pneumatic material conveying system, particularly a waste material conveying system. The figure shows an actuating unit of the system and a delivery end of material of the conveying system i.e. a part of the system in which the material being conveyed is separated from conveying air.

In the system according to the figure, the main conveying pipe 100 is connected in the normal conveying mode from the supply side to the separator device 20. The system comprises at least one vacuum generator 3 the suction side of which is connectable to the separator device 20 or to the conveying air channel 105 coming from the separator device so that, with the vacuum generator 3, it is possible to provide underpressure at least to a section of the conveying pipe 100. The system comprises at least one blower unit 4. An embodiment of the actuating unit according to the invention, which comprises at least one vacuum unit 3 and at least one blower unit 4, has several operating modes. The embodiment of Fig. 3 shows an operating mode in which the suction sides of both the vacuum unit 3 and the blower unit 4 are connected to the separator device or to the conveying air channel 105, 106 coming from the separator device 20, 20'. Then, suction as high as possible is providable in the conveying pipe 100. The suction side of the pump device 30 of the vacuum unit 3 and the suction side of the blower 40 of the blower unit 4 are connected in parallel in the operating mode in question, whereby a suction effect as high as possible is provided in the conveying pipe 100. In the embodiment of the figure, the blowing side of the vacuum unit 3 and the blowing side of the blower unit 4 are arranged in the operating mode in question to blow to an outlet channel 112, in which at least one filter device 129 for filtering outlet air is typically arranged, such as in the embodiment of the figure. This operating mode can be particularly utilised in a situation in which material being conveyed, such as waste material, is conveyed from one or more feed points 61 or equivalents to the conveying pipe 100. Then, an extremely effective feed of waste material is provided in the conveying pipe.

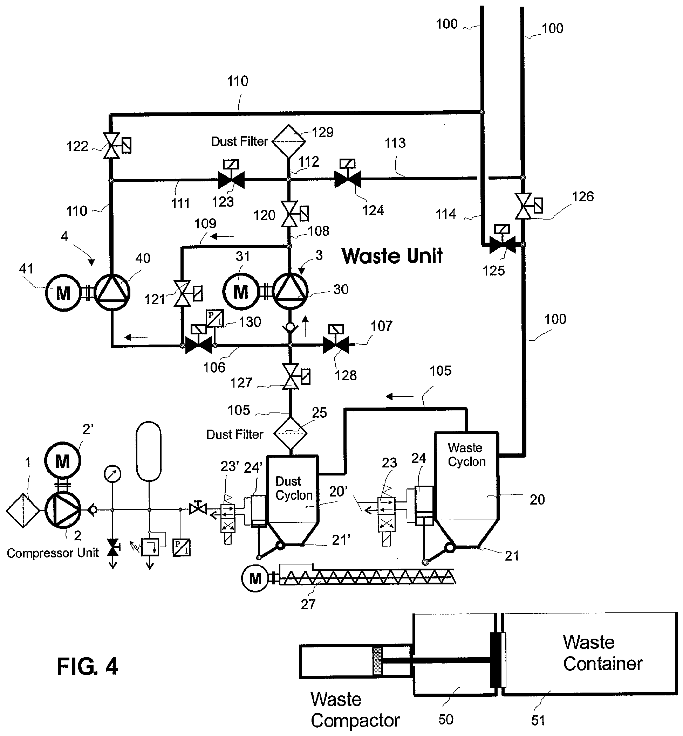

Fig. 4 shows a second operating mode of the actuating unit of the system according to the invention in which the blowing side of the vacuum generator 3 is connected to the suction side of the blowing unit 4 so that at least part of air on the blowing side of the vacuum generator is circulated on the suction side of the blowing unit. In the embodiment of Fig. 4, a conveying air channel 109 is arranged from the conveying air channel 108 of the blowing side of the vacuum unit 3 and conveyed to the medium channel 106 leading to the suction side of the blower unit. In the conveying air channel 109 is arranged a valve element 121 which is open in the operating mode of Fig. 4. The blower unit 4 is in the operating mode of Fig. 4 arranged to blow in the air channel 110 which leads to the conveying pipe 100 on its supply side. Then, in the conveying pipe at least on its return side is provided underpressure and a suction effect and in the conveying pipe on the supply side equivalently a blowing effect. In this operating mode, it is thus possible to provide in the circuit, a section of which is formed by at least a part of the conveying pipe 100, a maximal conveying air flow, because the vacuum unit 3 sucks from the delivery end of the conveying pipe and the blower unit blows from the supply end of the conveying pipe. In the operating mode, the volume of outlet air can be kept minimal or nonexistent, because the conveying air is circulated in the circuit, a section of which is formed by a part of the conveying pipe 100, and the blowing air of the vacuum unit is conveyed on the suction side of the blowing unit and further to the conveying pipe 100 and in the circulation back via the separator device 20 on the suction side of the vacuum unit. The vacuum unit and the blower unit are connected "in series". In this operating mode, an extremely efficient conveying effect is provided for materials being conveyed in the conveying pipe. This operating mode is used when conveying material in the conveying pipe to the delivery end, particularly to the separator device. Combining blowing with suction is extremely efficient, because the blowing effect i.e. the production of pressure is clearly more cost-effective than the production of underpressure.

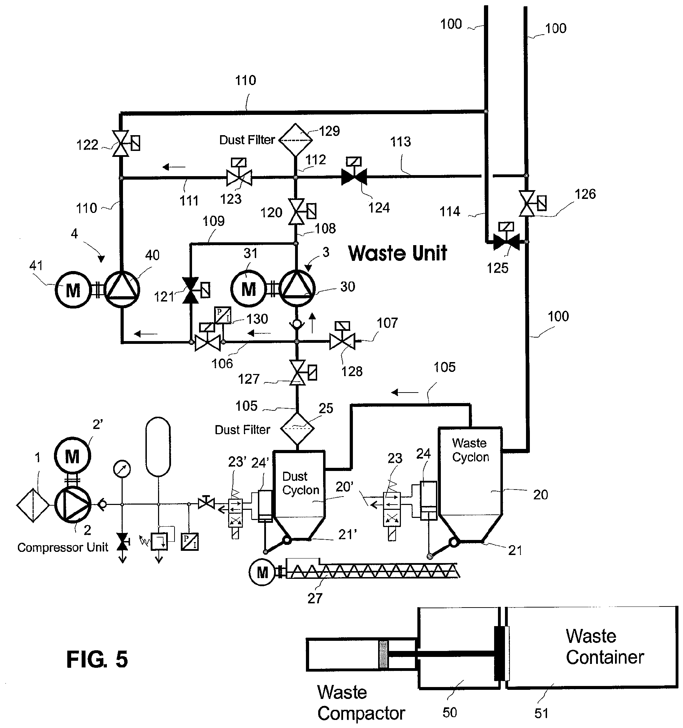

Fig. 5 shows a third operating mode of the actuating unit of the system, in which the blowing side of the vacuum unit 3 is connected to the air channel 110 connected on the supply side of the conveying pipe 100 and the blowing side of the blower unit 4 is connected to the air channel 110 connected on the supply side of the conveying pipe 100. The suction side of the vacuum generator is connected to the separator device 20 or the air channel 105 coming from it. The suction side of the blower unit 4 is connected to the separator device 20 or to the conveying air channel 105 coming from it with the air channel 106. Due to a possible requirement for extra air, there is arranged an inlet air channel 107 the valve of which is open in the embodiment of the figure, whereby on the suction side of the vacuum generator 3 and/or the blower 4 is led extra air. In the operating mode of this embodiment, a maximal air flow is provided in the pipe, because both the vacuum generator and the blower unit are arranged to blow in the conveying piping and suck from the conveying pipe. This operating mode can be utilised for the air flushing of the conveying pipe 100 and/or for the drying of the conveying pipe. In the vacuum unit 3 and/or the blower unit 4, the air is compressed and heats up. This facilitates and speeds up the drying operation.

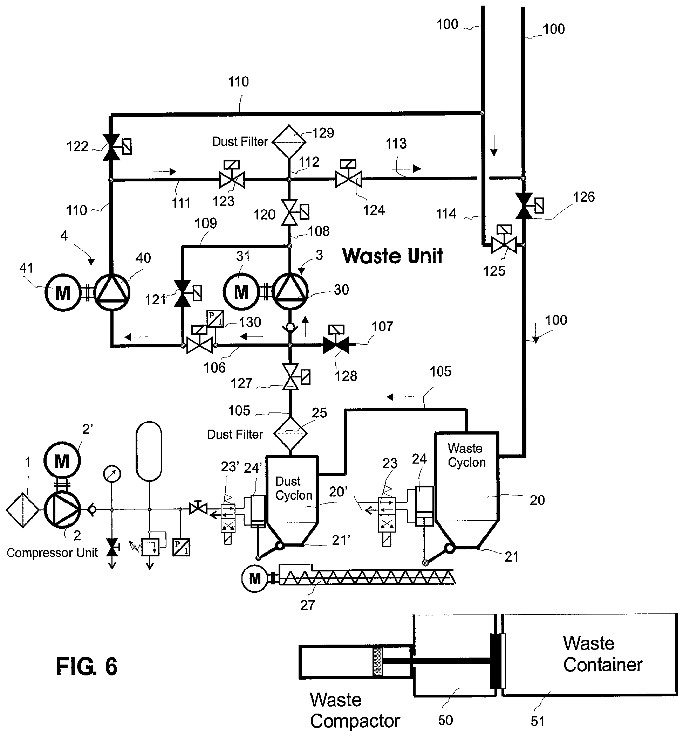

Fig. 6 shows an additional operating mode of the actuating unit in which it is possible to reverse the circulation direction of conveying air at least in a section of the conveying pipe 100. In the conveying pipe is arranged on the supply side at a distance from the separator device a valve element 126, at the reverse side of which in relation to the separator device is arranged an air channel 113 in which the blowing side of the vacuum unit is connectable. Equivalently, in the air channel 110 of the blowing side is arranged the valve element 122 which, when closed, prevents a connection of at least the blowing side of the blowing unit and/or the vacuum generator to the usual supply side of the conveying pipe. From the blowing side of the vacuum unit is arranged a medium passage 110, 111, 113 to the conveying pipe100 on its reversed supply side. Equivalently, from the blowing side of the vacuum unit 3 can be arranged a medium passage 108, 113 to the conveying pipe 100 on its reversed supply side. In the embodiment of the figure, a suction flow as effective as possible can be provided in the conveying pipe 100 with the vacuum generator and the blower connected in parallel. The reversed circulation direction can be used e.g. in removing a blockage from the conveying pipe.

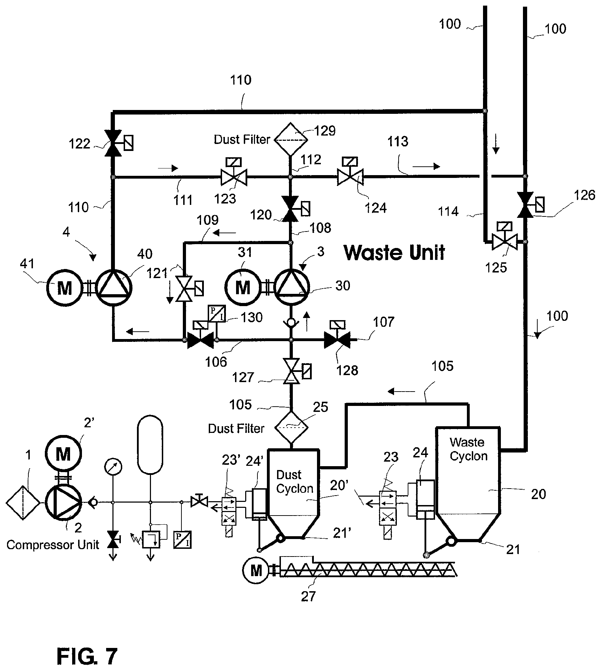

Fig. 7 additionally shows a further embodiment in which the blowing side of the vacuum unit 3 is connected on the suction side of the blower unit 4 and the blowing side of the blower unit 4 is connected via the conveying air channels 110, 111, 113 on the reversed supply side of the conveying pipe 100. The arrows designate the circulation direction of air in the system. In this embodiment, an effective combined suction and pressure effect is provided in the conveying pipe.

In a case according to the invention, the conveying pipe 100 is at least a section of a suction/blowing circuit, the output end and inlet end of which are advantageously arranged into connection with the waste station and in which the output end of the suction/blowing circuit is on the blowing side of the blower 40 and the inlet end on the suction side of the blower 40. The blower can then, the valve 69 being open, circulate air in the suction/blowing circuit a section of which is formed by the conveying pipe 100. The feed points 61, 66 can be located decentralised along the system pipings distributedly. In connection with the waste conveying system, the feed points can be e.g. waste bins or waste chutes.

In a case according to the invention, the conveying pipe 100 is at least a section of a suction/blowing circuit, the output end and inlet end of which are advantageously arranged into connection with the waste station and in which the output end of the suction/blowing circuit is on the blowing side of the vacuum generator and/or blower 40 and the inlet end on the suction side of the vacuum generator and/or blower 40. The vacuum generator and/or blower can circulate air in the suction/blowing circuit a section of which is formed by the conveying pipe 100. The feed points 61, 66 can be located decentralised along the system pipings distributedly. In connection with the waste conveying system, the feed points can be e.g. waste bins or waste chutes.

The invention thus relates to a method according to claim 1.

According to an embodiment of a method according to the invention, the circulation of air in the circuit, which comprises at least a part of the conveying pipe 100, is regulated and/or controlled and/or opened or closed by gate/regulating elements, such as valve elements 120, 121, 122, 123, 124, 125, 126, 127, V_{A}, V_{B}, V_{C}, V_{D}, which are arranged in the circuit.

In the first operating mode of an embodiment of the method according to the invention, underpressure is provided in the circuit with at least one first pump device, such as the vacuum generator 3, and/or one second pump device, such as the blower unit 4, the suction side of which is connected to the separator device 20 or to the conveying pipe 100 via an air channel 105, 106 leading to it.

In the first operating mode of an embodiment of the method according to the invention, the blowing side of at least one first pump device, such as the vacuum unit 3, and/or one second pump device, such as the blower unit 4, is connected to an outlet channel 112 or equivalent.

In the second operating mode of an embodiment of the method according to the invention, the blowing side of at least one first pump device, such as the vacuum unit 3, is connected to the suction side of at least one second pump device, such as the blower unit 4, so that at least part of air of the blowing side of the first pump device is circulated on the suction side of the second pump device.

In an embodiment of the method according to the invention, in the circuit is brought make-up air via at least one air inlet 107, 112 which advantageously comprises a valve element 128, 120.

In an embodiment of the method according to the invention, air is removed from the circuit via at least one air outlet 112 which advantageously comprises a gate/regulating element, such as the valve element 120.

In an embodiment of the method according to the invention, the conveying air circulation is connected in the reverse direction at least in a section of the circuit, which section is formed by at least a part of the conveying pipe 100, advantageously for removing a blockage.

In another embodiment of the method according to the invention, at least a part of the conveying pipe is flushed and/or dried with air by circulating conveying air in the circuit, particularly by blowing in the circuit with at least one first pump device, such as the vacuum generator 3, and/or one second pump device, such as the blower 4.

In an embodiment of the method according to the invention, material is fed from the material feed points 61 which are waste feed points, such as waste bins or waste chutes.

In an embodiment of the method according to the invention, between the material feed point 61 and the conveying pipe 100, there is at least one valve element 60 by opening and closing of which the feed of material and/or make-up air to the conveying pipe is regulated.

According to an advantageous embodiment, the valve element 60 between the material feed point 61 and the conveying pipe 100 is closed advantageously after a certain time from opening so that the valve 60 of the previous feed point is still open when the valve of the next feed point 61 is opened.

According to another advantageous embodiment, underpressure is provided in the conveying pipe 100 at least at the point of the feed point 61 intended to be emptied, the feed points are emptied to the conveying pipe 100 using an emptying sequence in which first is emptied a feed point located closer to the separator device 20 in the material conveying direction and next a feed point 61 located substantially farther from the separator device 20 in the material conveying direction.

The invention also relates to a pneumatic material conveying system, such as a waste conveying system, according to claim 14.

According to an advantageous embodiment, in the circuit, which comprises at least a part of the conveying pipe 100, are arranged gate/regulating elements, such as valve elements 120, 121, 122, 123, 124, 125, 126, 127, V_{A}, V_{B}, V_{C}, V_{D}, by means of which the circulation of conveying air can be regulated and/or controlled and/or opened or closed.

The means for generating a pressure difference comprise at least one first pump device, such as the vacuum generator 3, and/or one second pump device, such as the blower unit 4, the suction side of which is connected to the separator device 20 or to the conveying pipe 100 via an air channel 105, 106 leading to it.

According to another advantageous embodiment, in the first operating mode, the blowing side of at least one first pump device, such as the vacuum unit 3, and/or one second pump device, such as the blower unit 4, is connected to an outlet channel 112 or equivalent.

In the second operating mode of an embodiment, the blowing side of at least one first pump device, such as the vacuum unit 3, is connected to the suction side of at least one second pump device, such as the blower unit 4, so that at least part of air of the blowing side of the first pump device is circulated on the suction side of the second pump device.

According to a typical embodiment, the system comprises at least one air inlet 107, 112 which advantageously comprises the valve element 128, 120 for bringing make-up air in the circuit.

According to another typical embodiment, the system comprises at least one air outlet 112 which advantageously comprises a gate/regulating element, such as a valve element 120, for removing at least part of air from the circuit.

According to an advantageous embodiment, the system comprises means for connecting the conveying air circulation in the reverse direction in at least a section of the circuit, which section is formed by at least a part of the conveying pipe 100.

According to an advantageous embodiment, the system comprises means for flushing at least a part of the conveying pipe 100 with air and/or for drying by circulating the conveying air in the circuit, particularly by blowing in the circuit with at least one first pump device, such as the vacuum generator 3, and/one second pump device, such as the blower 4.

According to a further embodiment, the material feed points 61 are waste feed points, such as waste bins or waste chutes.

Between the feed point 61 and the conveying pipe 100, there is at least one valve element 60 by opening and closing of which the feed of material and/or make-up air to the conveying pipe is regulated.

It is obvious to those skilled in the art that the invention is not limited to the embodiments described above, but it may be varied within the scope of the enclosed claims.

## Claims

1. A method for feeding and conveying material in a pneumatic material conveying system, such as a waste conveying system, which conveying system comprises at least two feed points (61) of material, particularly of waste material, a material conveying piping comprising a main conveying pipe (100) into which several branch conveying pipes (101, 102) can be connected, wherein each feed point (61) can be connected via a respective feed pipe (103) to said branch conveying pipes (101, 102), a separator device (20) in which the material being conveyed is separated from conveying air, and means (3, 4) for providing a pressure difference in the conveying pipe (100) at least during the conveyance of the material, wherein the means for generating pressure difference comprise at least one first pump device such as a vacuum unit (3), and at least one second pump device, such as a blower unit (4), wherein a suction side of said at least one first pump device and said at least one second pump device is configured to be connected via the separator device (20) or via an air channel (105, 106) leading to the separator device, to the main conveying pipe (100), wherein at least a part of the main conveying pipe (100) is connectable as a section of a circuit in which conveying air is circulated at least during the conveyance of the material with said at least one first pump device and said at least one second pump device, wherein in the method pressure is provided in the circuit with said at least one second pump device, wherein the blowing side of said at least one second pump device is connected to blow in the circuit, and wherein the sum of suctions provided by the first pump device (3) and the second pump device (4) to the main conveying pipe (100), from the side of the separator device (20), is greater than the blowing provided by second pump device (4), whereby conveyance takes place in underpressure.

2. A method according to claim 1, **characterised in that** the circulation of air in the circuit, which comprises at least a part of the conveying piping, is regulated and/or controlled and/or opened or closed by gate/regulating elements, such as valve elements (120, 121, 122, 123, 124, 125, 126, 127, V_{A}, V_{B}, V_{C}, V_{D}), which are arranged in the circuit.

3. A method according to claim 1 or 2, **characterised in that**, in the method in a first operating mode, underpressure is provided in the circuit with said at least one first pump device, such as the vacuum unit (3), and/or said one second pump device such as the blower unit (4), the suction side of which is connected to the separator device (20) or via an air channel (105, 106) leading to the separator device, to the conveying pipe (100).

4. A method according to any one of claims 1-3, **characterised in that**, in the first operating mode of the method, the blowing side of said at least one first pump device, such as the vacuum unit (3), and/or said one second pump device, such as the blower unit (4), is connected to an outlet channel (112).

5. A method according to any one of claims 1-4, **characterised in that**, in a second operating mode of the method, the blowing side of said at least one first pump device, such as the vacuum unit (3), is connected to the suction side of said at least one second pump device, such as the blower unit (4), so that at least part of air of the blowing side of the first pump device is circulated on the suction side of the second pump device.

6. A method according to any one of claims 1-5, **characterised in that**, in the method, in the circuit is brought make-up air via at least one air inlet (107, 112) which advantageously comprises a valve element (128, 120).

7. A method according to any one of claims 1-6, **characterised in that**, in the method, air is removed from the circuit via at least one air outlet (112) which advantageously comprises a gate/regulating element, such as valve element (120).

8. A method according to any one of claims 1-7, **characterised in that**, in the method, conveying air circulation is connected in the reverse direction at least in a section of the circuit, which section is formed by at least a part of the conveying pipe (100), advantageously for removing a blockage.

9. A method according to any one of claims 1-8, **characterised in that**, in the method, at least a part of the conveying piping is flushed and/or dried with air by circulating conveying air in the circuit, particularly by blowing in the circuit with said at least one first pump device, such as the vacuum unit (3), and/or said one second pump device, such as the blower unit (4).

10. A method according to any one of claims 1-9, **characterised in that**, in the method, material is fed from the material feed points (61) which are waste feed points, such as waste bins or waste chutes.

11. A method according to any one of claims 1-10, **characterised in that**, between the material feed point (61) and the conveying pipe (100), there is at least one valve element (60) by opening and closing of which the feed of material and/or make-up air in the conveying pipe is regulated.

12. A method according to claim 11, **characterised in that** the valve element (60) between the material feed point (61) and the conveying pipe (100) is closed, advantageously after a certain time after opening, so that the valve (60) of the previous feed point is still open when the valve of the next feed point (61) is opened.

13. A method according to any one of claims 1-12, **characterised in that** underpressure is provided in the conveying pipe (100) at least at the point of the feed point (61) intended to be emptied, the feed points are emptied in the conveying pipe (100) by using an emptying sequence in which first is emptied a feed point located closer to the separator device (20) in the material conveying direction and next a feed point (61) located substantially farther from the separator device (20) in the material conveying direction.

14. A pneumatic material conveying system, such as a waste conveying system, which comprises at least two feed points (61) of material, particularly of waste material, a material conveying piping comprising a main conveying pipe (100) into which several branch conveying pipes (101, 102) can be connected, wherein each feed point (61) can be connected via a respective feed pipe (103) to said branch conveying pipes (101, 102), a separator device (20) configured to separate the material being conveyed from conveying air, and means (3, 4) for providing a pressure difference in the conveying pipe (100) at least during the conveyance of the material, wherein the means for generating pressure difference comprise at least one first pump device, such as a vacuum unit (3), and/or at least one second pump device such as a blower unit (4), wherein a suction side of said at least one first pump device and said at least one second pump device is configured to be connected via the separator device (20), or via an air channel (105, 106) leading to the separator device, to the main conveying pipe (100), wherein at least a part of the main conveying pipe (100) is connectable as a section of a circuit configured to circulate conveying air at least during the conveyance of the material with said at least one first pump device and said at least one second pump device, wherein the system is arranged to provide pressure in the circuit with said at least one second pump device, wherein the blowing side of said at least one second pump device is connected to blow in the circuit, such that the sum of suctions provided by the first pump device (3) and the second pump device (4) to the main conveying pipe (100), from the side of the separator device (20), is greater than the blowing provided by the second pump device (4), whereby conveyance is configured to take place in underpressure.

15. A material conveying system according to claim 14, **characterised in that**, in the circuit, which comprises at least a part of the conveying piping, are arranged gate/regulating elements, such as valve elements (120, 121, 122, 123, 124, 125, 126, 127, V_{A}, V_{B}, V_{C}, V_{D}), by means of which the circulation of conveying air can be regulated and/or controlled and/or opened and closed.

16. A material conveying system according to any one of claims 14-15, **characterised in that**, in a first operating mode, the blowing side of at least said one first pump device, such as the vacuum unit (3), and/or said one second pump device, such as the blower unit (4), is configured to be connected to an outlet channel (112).

17. A material conveying system according to any one of claims 14-16, **characterised in that**, in a second operating mode, the blowing side of said at least one first pump device, such as the vacuum unit (3), is configured to be connected to the suction side of said at least one second pump device, such as the blower unit (4), so that at least part of air of the blowing side of the first pump device is configured to circulate on the suction side of the second pump device.

18. A material conveying system according to any one of claims 14-17, **characterised in that** the system comprises at least one air inlet (107, 112) which advantageously comprises a valve element (128, 120) for bringing make-up air in the circuit.

19. A material conveying system according to any one of claims 14-18, **characterised in that** the system comprises at least one air outlet (112) which advantageously comprises a gate/regulating element, such as a valve element (120), for removing at least part of air from the circuit.

20. A material conveying system according to any one of claims 14-19, **characterised in that** the system comprises means for connecting the conveying air circulation in the reverse direction at least in a section of the circuit which section is formed by at least a part of the conveying pipe (100).

21. A material conveying system according to any one of claims 14-20, **characterised in that** the system comprises means for flushing at least a part of the conveying pipe (100) with air and/or drying by circulating conveying air in the circuit, particularly by blowing in the circuit with said at least one first pump device, such as the vacuum unit (3), and/or said one second pump device, such as the blower unit (4).

22. A material conveying system according to any one of claims 14-21, **characterised in that** the material feed points (61) are waste feed points, such as waste bins or waste chutes.

23. A material conveying system according to any one of claims 14-22, **characterised in that**, between the material feed point (61) and the conveying pipe (100), there is at least one valve element (60) configured to regulate by opening or closing the feed of material and/or make-up air in the conveying pipe.

## Patentansprüche

1. Verfahren zum Zuführen und Fördern von Material in einem pneumatischen Materialfördersystem, wie z.B. einem Abfallfördersystem, welches Fördersystem mindestens zwei Zuführstellen (61) für Material, insbesondere für Abfallmaterial, aufweist, eine Materialförderleitung, die eine Hauptförderleitung (100) umfasst, in die mehrere Abzweigförderleitungen (101, 102) angeschlossen werden können, wobei jede Zuführstelle (61) über eine jeweilige Zuführleitung (103) mit den Abzweigförderleitungen (101, 102) verbunden werden kann, eine Separatoreinrichtung (20), in der das geförderte Material von Förderluft getrennt wird, und Mittel (3, 4) zum Bereitstellen einer Druckdifferenz in der Förderleitung (100) zumindest während der Förderung des Materials, wobei die Mittel zum Erzeugen der Druckdifferenz mindestens eine erste Pumpeneinrichtung, wie etwa eine Vakuumeinheit (3), und mindestens eine zweite Pumpeneinrichtung aufweisen, wie etwa eine Gebläseeinheit (4), wobei eine Saugseite der mindestens einen ersten Pumpeneinrichtung und der mindestens einen zweiten Pumpeneinrichtung so ausgestaltet ist, dass sie über die Separatoreinrichtung (20) oder über einen Luftkanal (105, 106), der zu der Separatoreinrichtung führt, mit der Hauptförderleitung (100) verbunden ist, wobei mindestens ein Teil der Hauptförderleitung (100) als ein Abschnitt eines Kreislaufs verbindbar ist, in dem Förderluft zumindest während der Förderung des Materials mit der mindestens einen ersten Pumpeneinrichtung und der mindestens einen zweiten Pumpeneinrichtung zirkuliert wird, wobei in dem Verfahren Druck in dem Kreislauf mit der mindestens einen zweiten Pumpeneinrichtung bereitgestellt wird, wobei die Gebläseseite der mindestens einen zweiten Pumpeneinrichtung angeschlossen ist, um in den Kreislauf zu blasen, und wobei die Summe der von der ersten Pumpeneinrichtung (3) und der zweiten Pumpeneinrichtung an die Hauptförderleitung (100) bereitgestellten Saugkräfte von der Seite der Separatoreinrichtung (20) größer ist als das von der zweiten Pumpeneinrichtung (4) bereitgestellte Gebläse, wodurch die Förderung im Unterdruck stattfindet.

2. Verfahren nach Anspruch 1, **dadurch gekennzeichnet, dass** die Zirkulation der Luft in dem Kreislauf, der zumindest einen Teil der Förderleitung aufweist, durch Absperr-/Regulierungselemente, wie Ventilelemente (120, 121, 122, 123, 124, 125, 126, 127, V_{A}, V_{B}, V_{C}, V_{D}), die in dem Kreislauf angeordnet sind, eingestellt und/oder gesteuert und/oder geöffnet oder geschlossen wird.

3. Verfahren nach Anspruch 1 oder 2, **dadurch gekennzeichnet, dass** bei dem Verfahren in einem ersten Betriebsmodus Unterdruck in dem Kreislauf mit der mindestens einen ersten Pumpeinrichtung, wie etwa der Vakuumeinheit (3), und/oder der einen zweiten Pumpeinrichtung, wie etwa der Gebläseeinheit (4), bereitgestellt wird, deren Saugseite mit der Separatoreinrichtung (20) oder über einen zur Separatoreinrichtung führenden Luftkanal (105, 106) mit der Förderleitung (100) verbunden ist.

4. Verfahren nach einem der Ansprüche 1 bis 3, **dadurch gekennzeichnet, dass** im ersten Betriebsmodus des Verfahrens die Gebläseseite der mindestens einen ersten Pumpeneinrichtung, wie etwa der Vakuumeinheit (3), und/oder der einen zweiten Pumpeneinrichtung, wie etwa der Gebläseeinheit (4), mit einem Auslasskanal (112) verbunden ist.

5. Verfahren nach einem der Ansprüche 1 bis 4, **dadurch gekennzeichnet, dass** in einem zweiten Betriebsmodus des Verfahrens die Gebläseseite der mindestens einen ersten Pumpeneinrichtung, wie etwa der Vakuumeinheit (3), mit der Saugseite der mindestens einen zweiten Pumpeneinrichtung, wie etwa der Gebläseeinheit (4), verbunden wird, so dass mindestens ein Teil der Luft der Gebläseseite der ersten Pumpeneinrichtung auf der Saugseite der zweiten Pumpeneinrichtung zirkuliert wird.

6. Verfahren nach einem der Ansprüche 1 bis 5, **dadurch gekennzeichnet, dass** bei dem Verfahren in den Kreislauf über mindestens einen Lufteinlass (107, 112), der vorteilhafterweise ein Ventilelement (128, 120) aufweist, Zusatzluft eingebracht wird.

7. Verfahren nach einem der Ansprüche 1 bis 6, **dadurch gekennzeichnet, dass** bei dem Verfahren Luft aus dem Kreislauf über mindestens einen Luftauslass (112) entfernt wird, der vorteilhafterweise ein Absperr-/Regulierungselement, wie ein Ventilelement (120), aufweist.

8. Verfahren nach einem der Ansprüche 1 bis 7, **dadurch gekennzeichnet, dass** bei dem Verfahren die Zirkulation der Förderluft zumindest in einem Abschnitt des Kreislaufs, der durch zumindest einen Teil der Förderleitung (100) ausgebildet ist, in die Rückwärtsrichtung angeschlossen wird, vorteilhaft zur Entfernung einer Verstopfung.

9. Verfahren nach einem der Ansprüche 1 bis 8, **dadurch gekennzeichnet, dass** bei dem Verfahren mindestens ein Teil der Förderleitung mit Luft gespült und/oder getrocknet wird, indem Förderluft im Kreislauf zirkuliert wird, insbesondere durch Blasen im Kreislauf mit der mindestens einen ersten Pumpeneinrichtung, wie etwa der Vakuumeinheit (3), und/oder der einen zweiten Pumpeneinrichtung, wie etwa der Gebläseeinheit (4).

10. Verfahren nach einem der Ansprüche 1 bis 9, **dadurch gekennzeichnet, dass** bei dem Verfahren Material von den Materialzuführstellen (61) zugeführt wird, die Abfallzuführstellen, wie Abfallbehälter oder Abfallrutschen, sind.

11. Verfahren nach einem der Ansprüche 1 bis 10, **dadurch gekennzeichnet, dass** zwischen der Materialzuführstelle (61) und der Förderleitung (100) mindestens ein Ventilelement (60) vorhanden ist, durch dessen Öffnen und Schließen die Zufuhr von Material und/oder Zusatzluft in die Förderleitung eingestellt wird.

12. Verfahren nach Anspruch 11, **dadurch gekennzeichnet, dass** das Ventilelement (60) zwischen der Materialzuführstelle (61) und der Förderleitung (100) geschlossen wird, vorteilhaft nach einer gewissen Zeit nach dem Öffnen, so dass das Ventil (60) der vorherigen Zuführstelle noch offen ist, wenn das Ventil der nächsten Zuführstelle (61) geöffnet wird.

13. Verfahren nach einem der Ansprüche 1 bis 12, **dadurch gekennzeichnet, dass** in der Förderleitung (100) zumindest an der zu entleerenden Zuführstelle (61) ein Unterdruck bereitgestellt wird, die Zuführstellen in der Förderleitung (100) unter Verwendung einer Entleerungsreihenfolge entleert werden, bei der zunächst eine Zuführstelle entleert wird, die in Materialförderrichtung näher an der Separatoreinrichtung (20) liegt, und anschließend eine Zuführstelle (61), die in Materialförderrichtung wesentlich weiter von der Separatoreinrichtung (20) entfernt liegt.

14. Pneumatisches Materialfördersystem, wie z.B. ein Abfallfördersystem, das mindestens zwei Zuführstellen (61) für Material, insbesondere für Abfallmaterial, aufweist, eine Materialförderleitung, die eine Hauptförderleitung (100) aufweist, an die mehrere Abzweigförderleitungen (101, 102) angeschlossen werden können, wobei jede Zuführstelle (61) über eine jeweilige Zuführleitung (103) mit den Abzweigförderleitungen (101, 102) verbunden werden kann, eine Separatoreinrichtung (20), die ausgestaltet ist, um das geförderte Material von der Förderluft zu trennen, und Mittel (3, 4) zum Bereitstellen einer Druckdifferenz in der Förderleitung (100) zumindest während der Förderung des Materials, wobei die Mittel zum Erzeugen einer Druckdifferenz mindestens eine erste Pumpeneinrichtung, wie etwa eine Vakuumeinheit (3), und/oder mindestens eine zweite Pumpeneinrichtung, wie etwa eine Gebläseeinheit (4), aufweisen, wobei eine Saugseite der mindestens einen ersten Pumpeneinrichtung und der mindestens einen zweiten Pumpeneinrichtung ausgestaltet ist, um über die Separatoreinrichtung (20), oder über einen Luftkanal (105, 106), der zu der Separatoreinrichtung führt, mit der Hauptförderleitung (100) verbunden ist, wobei zumindest ein Teil der Hauptförderleitung (100) als ein Abschnitt eines Kreislaufs verbindbar ist, der so ausgestaltet ist, dass er zumindest während der Förderung des Materials mit der zumindest einen ersten Pumpeneinrichtung und der zumindest einen zweiten Pumpeneinrichtung Förderluft zirkuliert, wobei das System so angeordnet ist, dass es einen Druck in dem Kreislauf mit der zumindest einen zweiten Pumpeneinrichtung bereitstellt, wobei die Gebläseseite der mindestens einen zweiten Pumpeneinrichtung angeschlossen ist, um in den Kreislauf zu blasen, so dass die Summe der von der ersten Pumpeneinrichtung (3) und der zweiten Pumpeneinrichtung an die Hauptförderleitung (100) von der Seite der Separatoreinrichtung (20) aus bereitgestellten Saugkräfte größer ist als das von der zweiten Pumpeneinrichtung (4) bereitgestellte Gebläse, wodurch die Förderung so ausgestaltet ist, dass sie bei Unterdruck stattfindet.

15. Materialfördersystem nach Anspruch 14, **dadurch gekennzeichnet, dass** in dem Kreislauf, der zumindest einen Teil der Förderleitung aufweist, Absperr-/Regulierungselemente, wie beispielsweise Ventilelemente (120, 121, 122, 123, 124, 125, 126, 127, V_{A}, V_{B}, V_{C}, V_{D}), angeordnet sind, mit denen die Zirkulation der Förderluft eingestellt und/oder gesteuert und/oder geöffnet und geschlossen werden kann.

16. Materialfördersystem nach einem der Ansprüche 14 bis 15, **dadurch gekennzeichnet, dass** in einem ersten Betriebsmodus die Gebläseseite mindestens der einen ersten Pumpeneinrichtung, wie etwa der Vakuumeinheit (3), und/oder der einen zweiten Pumpeneinrichtung, wie etwa der Gebläseeinheit (4), ausgestaltet ist, um mit einem Auslasskanal (112) verbunden zu werden.

17. Materialfördersystem nach einem der Ansprüche 14 bis 16, **dadurch gekennzeichnet, dass** in einem zweiten Betriebsmodus die Gebläseseite der mindestens einen ersten Pumpeneinrichtung, wie etwa der Vakuumeinheit (3), ausgestaltet ist, um mit der Saugseite der mindestens einen zweiten Pumpeneinrichtung, wie etwa der Gebläseeinheit (4), verbunden zu werden, so dass mindestens ein Teil der Luft der Gebläseseite der ersten Pumpeneinrichtung ausgestaltet ist, um auf der Saugseite der zweiten Pumpeneinrichtung zu zirkulieren.

18. Materialfördersystem nach einem der Ansprüche 14 bis 17, **dadurch gekennzeichnet, dass** das System mindestens einen Lufteinlass (107, 112) aufweist, der vorteilhaft ein Ventilelement (128, 120) zum Einbringen von Zusatzluft in den Kreislauf aufweist.

19. Materialfördersystem nach einem der Ansprüche 14 bis 18, **dadurch gekennzeichnet, dass** das System mindestens einen Luftauslass (112) aufweist, der vorteilhafterweise ein Absperr-/Regulierungselement, wie beispielsweise ein Ventilelement (120), aufweist, um mindestens einen Teil der Luft aus dem Kreislauf zu entfernen.

20. Materialfördersystem nach einem der Ansprüche 14 bis 19, **dadurch gekennzeichnet, dass** das System Mittel aufweist, um die Zirkulation der Förderluft in Rückwärtsrichtung zumindest in einem Abschnitt des Kreislaufs zu verbinden, der durch zumindest einen Teil der Förderleitung (100) ausgebildet ist.

21. Materialfördersystem nach einem der Ansprüche 14 bis 20, **dadurch gekennzeichnet, dass** das System Mittel zum Spülen zumindest eines Teils der Förderleitung (100) mit Luft und/oder zum Trocknen durch Zirkulieren von Förderluft in dem Kreislauf, insbesondere durch Blasen in dem Kreislauf mit der zumindest einen ersten Pumpeinrichtung, wie etwa der Vakuumeinheit (3), und/oder der einen zweiten Pumpeinrichtung, wie etwa der Gebläseeinheit (4), aufweist.

22. Materialfördersystem nach einem der Ansprüche 14 bis 21, **dadurch gekennzeichnet, dass** die Materialzuführstellen (61) Abfallzuführstellen, wie Abfallbehälter oder Abfallrutschen, sind.

23. Materialfördersystem nach einem der Ansprüche 14 bis 22, **dadurch gekennzeichnet, dass** zwischen der Zuführstelle (61) und der Förderleitung (100) mindestens ein Ventilelement (60) vorhanden ist, das ausgestaltet ist, um durch Öffnen oder Schließen die Zufuhr von Material und/oder Zusatzluft in die Förderleitung einzustellen.

## Revendications

1. Procédé pour introduire et transporter des matières dans un système de transport de matières pneumatique, tel qu'un système de transport de déchets, lequel système de transport comprend au moins deux points d'alimentation (61) de matières, en particulier de matières de déchets, une conduite de transport de matières comprenant un conduit de transport principal (100) dans lequel plusieurs conduits de transport ramifiés (101, 102) sont aptes à être raccordés, dans lequel chaque point d'alimentation (61) est apte à être raccordé via un conduit d'alimentation respectif (103) auxdits conduits de transport ramifiés (101, 102),
un dispositif séparateur (20) dans lequel les matières transportées sont séparées d'un air de transport, et un moyen (3, 4) pour fournir une différence de pression dans le conduit de transport (100) au moins pendant le transport des matières, dans lequel le moyen pour générer une différence de pression comprend au moins un premier dispositif formant pompe, tel qu'une unité à vide (3), et au moins un second dispositif formant pompe, tel qu'une unité de soufflage (4),
dans lequel un côté aspiration dudit au moins un premier dispositif formant pompe et dudit au moins un second dispositif formant pompe est configuré pour être raccordé par le biais du dispositif séparateur (20) ou via un canal d'air (105, 106) menant au dispositif séparateur, au conduit de transport principal (100),
dans lequel au moins une partie du conduit de transport principal (100) est apte à être raccordée en tant que section d'un circuit dans lequel de l'air de transport est mis en circulation au moins pendant le transport des matières avec ledit au moins un premier dispositif formant pompe et ledit au moins un second dispositif formant pompe,
dans lequel une pression est, dans le procédé, fournie dans le circuit avec ledit au moins un second dispositif formant pompe,
dans lequel le côté soufflage dudit au moins un second dispositif formant pompe est raccordé de façon à souffler dans le circuit, et dans lequel la somme des aspirations fournies par le premier dispositif formant pompe (3) et le second dispositif formant pompe (4) au conduit de transport principal (100), depuis le côté du dispositif séparateur (20), est supérieure au soufflage fourni par le second dispositif formant pompe (4), ce par quoi un transport est mis en oeuvre en sous-pression.

2. Procédé selon la revendication 1, **caractérisé en ce que** la circulation d'air dans le circuit, qui comprend au moins une partie de la conduite de transport, est régulée et/ou commandée et/ou ouverte ou fermée par des éléments de blocage/régulation, tels que des éléments vannes (120, 121, 122, 123, 124, 125, 126, 127, V_{A}, V_{B}, V_{C}, V_{D}), qui sont disposés dans le circuit.

3. Procédé selon la revendication 1 ou la revendication 2, **caractérisé en ce que**, dans le procédé dans un premier mode de fonctionnement, une sous-pression est fournie dans le circuit avec ledit au moins un premier dispositif formant pompe, tel que l'unité à vide (3), et/ou ledit second dispositif formant pompe, tel que l'unité de soufflage (4), dont le côté aspiration est raccordé au dispositif séparateur (20) ou via un canal d'air (105, 106) menant au dispositif séparateur, au conduit de transport (100).

4. Procédé selon l'une quelconque des revendications 1 à 3, **caractérisé en ce que**, dans le premier mode de fonctionnement du procédé, le côté soufflage dudit au moins un premier dispositif formant pompe, tel que l'unité à vide (3), et/ou dudit second dispositif formant pompe, tel que l'unité de soufflage (4), est raccordé à un canal de sortie (112).

5. Procédé selon l'une quelconque des revendications 1 à 4, **caractérisé en ce que**, dans un second mode de fonctionnement du procédé, le côté soufflage dudit au moins un premier dispositif formant pompe, tel que l'unité à vide (3), est raccordé au côté aspiration dudit au moins un second dispositif formant pompe, tel que l'unité de soufflage (4), de sorte qu'au moins une partie de l'air du côté soufflage du premier dispositif formant pompe est mise en circulation sur le côté aspiration du second dispositif formant pompe.

6. Procédé selon l'une quelconque des revendications 1 à 5, **caractérisé en ce que**, dans le procédé, de l'air d'appoint est amené dans le circuit via au moins une entrée d'air (107, 112) qui comprend avantageusement un élément vanne (128, 120).

7. Procédé selon l'une quelconque des revendications 1 à 6, **caractérisé en ce que**, dans le procédé, de l'air est retiré du circuit via au moins une sortie d'air (112) qui comprend avantageusement un élément de blocage/régulation, tel qu'un élément vanne (120).

8. Procédé selon l'une quelconque des revendications 1 à 7, **caractérisé en ce que**, dans le procédé, une circulation d'air de transport est raccordée en sens inverse au moins dans une section du circuit, laquelle section est formée par au moins une partie du conduit de transport (100), avantageusement pour éliminer une obstruction.

9. Procédé selon l'une quelconque des revendications 1 à 8, **caractérisé en ce que**, dans le procédé, au moins une partie de la conduite de transport est nettoyée et/ou séchée avec de l'air par la mise en circulation d'air de transport dans le circuit, en particulier par soufflage dans le circuit avec ledit au moins un premier dispositif formant pompe, tel que l'unité à vide (3), et/ou ledit second dispositif formant pompe, tel que l'unité de soufflage (4).

10. Procédé selon l'une quelconque des revendications 1 à 9, **caractérisé en ce que**, dans le procédé, les matières sont introduites en provenance des points d'alimentation de matières (61) qui sont des points d'alimentation de déchets, tels que des bacs à déchets ou des vide-ordures.

11. Procédé selon l'une quelconque des revendications 1 à 10, **caractérisé en ce que**, entre le point d'alimentation de matières (61) et le conduit de transport (100), il y a au moins un élément vanne (60) par l'ouverture et la fermeture duquel l'introduction de matières et/ou d'air d'appoint dans le conduit de transport est régulée.

12. Procédé selon la revendication 11, **caractérisé en ce que** l'élément vanne (60) entre le point d'alimentation de matières (61) et le conduit de transport (100) est fermé, avantageusement après un certain temps après l'ouverture, de sorte que la vanne (60) du point d'alimentation précédent est encore ouverte lorsque la vanne du point d'alimentation suivant (61) est ouverte.

13. Procédé selon l'une quelconque des revendications 1 à 12, **caractérisé en ce qu'**une sous-pression est fournie dans le conduit de transport (100) au moins au niveau du point du point d'alimentation (61) destiné à être vidé, les points d'alimentation sont vidés dans le conduit de transport (100) en utilisant une séquence de vidage dans laquelle est vidé tout d'abord un point d'alimentation situé plus près du dispositif séparateur (20) dans la direction de transport de matières, et puis un point d'alimentation (61) situé sensiblement plus loin du dispositif séparateur (20) dans la direction de transport de matières.

14. Système de transport de matières pneumatique, tel qu'un système de transport de déchets, qui comprend au moins deux points d'alimentation (61) de matières, en particulier de matières de déchets, une conduite de transport de matières comprenant un conduit de transport principal (100) dans lequel plusieurs conduits de transport ramifiés (101, 102) sont aptes à être raccordés, dans lequel chaque point d'alimentation (61) est apte à être raccordé via un conduit d'alimentation respectif (103) auxdits conduits de transport ramifiés (101, 102),
un dispositif séparateur (20) configuré pour séparer les matières transportées vis-à-vis de l'air de transport, et un moyen (3, 4) pour fournir une différence de pression dans le conduit de transport (100) au moins pendant le transport des matières, dans lequel le moyen pour générer une différence de pression comprend au moins un premier dispositif formant pompe, tel qu'une unité à vide (3), et/ou au moins un second dispositif formant pompe, tel qu'une unité de soufflage (4),
dans lequel un côté aspiration dudit au moins un premier dispositif formant pompe et dudit au moins un second dispositif formant pompe est configuré pour être raccordé via le dispositif séparateur (20), ou via un canal d'air (105, 106) menant au dispositif séparateur, au conduit de transport principal (100), dans lequel au moins une partie du conduit de transport principal (100) est apte à être connectée, en tant que section d'un circuit configuré pour mettre en circulation de l'air de transport au moins pendant le transport des matières, avec ledit au moins un premier dispositif formant pompe et ledit au moins un second dispositif formant pompe,
dans lequel le système est conçu pour fournir une pression dans le circuit avec ledit au moins un second dispositif formant pompe, dans lequel le côté soufflage dudit au moins un second dispositif formant pompe est raccordé de façon à souffler dans le circuit,
de telle sorte que la somme des aspirations fournies par le premier dispositif formant pompe (3) et le second dispositif formant pompe (4) au conduit de transport principal (100), depuis le côté du dispositif séparateur (20), est supérieure au soufflage fourni par le second dispositif formant pompe (4), ce par quoi un transport est configurée pour être mis en oeuvre en sous-pression.

15. Système de transport de matières selon la revendication 14, **caractérisé en ce que**, dans le circuit, qui comprend au moins une partie de la conduite de transport, sont disposés des éléments de blocage/régulation, tels que des éléments vannes (120, 121, 122, 123, 124, 125, 126, 127, V_{A}, V_{B}, V_{C}, V_{D}), au moyen desquels la circulation d'air de transport peut être régulée et/ou commandée et/ou ouverte et fermée.

16. Système de transport de matières selon l'une quelconque des revendications 14 à 15, **caractérisé en ce que**, dans un premier mode de fonctionnement, le côté soufflage d'au moins ledit premier dispositif formant pompe, tel que l'unité à vide (3), et/ou ledit second dispositif formant pompe, tel que l'unité de soufflage (4), est configuré pour être raccordé à un canal de sortie (112).

17. Système de transport de matières selon l'une quelconque des revendications 14 à 16, **caractérisé en ce que**, dans un second mode de fonctionnement, le côté soufflage dudit au moins un premier dispositif formant pompe, tel que l'unité à vide (3), est configuré pour être raccordé au côté aspiration dudit au moins un second dispositif formant pompe, tel que l'unité de soufflage (4), de sorte qu'au moins une partie de l'air du côté soufflage du premier dispositif formant pompe est configurée pour circuler sur le côté aspiration du second dispositif formant pompe.

18. Système de transport de matières selon l'une quelconque des revendications 14 à 17, **caractérisé en ce que** le système comprend au moins une entrée d'air (107, 112) qui comprend avantageusement un élément vanne (128, 120) pour amener de l'air d'appoint dans le circuit.

19. Système de transport de matières selon l'une quelconque des revendications 14 à 18, **caractérisé en ce que** le système comprend au moins une sortie d'air (112) qui comprend avantageusement un élément de blocage/régulation, tel qu'un élément vanne (120), pour éliminer au moins une partie de l'air du circuit.

20. Système de transport de matières selon l'une quelconque des revendications 14 à 19, **caractérisé en ce que** le système comprend un moyen pour raccorder la circulation d'air de transport en sens inverse au moins dans une section du circuit laquelle section est formée par au moins une partie du conduit de transport (100).

21. Système de transport de matières selon l'une quelconque des revendications 14 à 20, **caractérisé en ce que** le système comprend un moyen pour nettoyer au moins une partie du conduit de transport (100) avec de l'air et/ou sécher par la mise en circulation d'air de transport dans le circuit, en particulier par soufflage dans le circuit avec ledit au moins un premier dispositif formant pompe, tel que l'unité à vide (3), et/ou ledit second dispositif formant pompe, tel que l'unité de soufflage (4).

22. Système de transport de matières selon l'une quelconque des revendications 14 à 21, **caractérisé en ce que** les points d'alimentation de matières (61) sont des points d'alimentation de déchets, tels que des bacs à déchets ou des vide-ordures.

23. Système de transport de matières selon l'une quelconque des revendications 14 à 22, **caractérisé en ce que**, entre le point d'alimentation de matières (61) et le conduit de transport (100), il y a au moins un élément vanne (60) configuré pour réguler par ouverture ou fermeture l'introduction de matières et/ou d'air d'appoint dans le conduit de transport.
